# FASCICULE DE BREVET EUROPEEN

(11) **EP 2 875 997 B1**
(45) Date de publication et mention de la délivrance du brevet: **07.03.2018**
(21) Numéro de dépôt: 14191954.8
(22) Date de dépôt: 05.11.2014
(51) Int. Cl.: B60R 5/04

(54) **SYSTÈME DE RECOUVREMENT D'UN COMPARTIMENT À BAGAGES DE VÉHICULE AUTOMOBILE**
ABDECKVORRICHTUNG EINES KOFFERRAUMFACHS EINES KRAFTFAHRZEUGS
SYSTEM FOR COVERING A LUGGAGE COMPARTMENT OF AN AUTOMOBILE

(30) Priorité: 26.11.2013 FR 1361623
(43) Date de publication de la demande: 27.05.2015
(73) Titulaire: CENTRE D'ETUDE ET DE RECHERCHE POUR L'AUTOMOBILE (CERA), 51100 Reims (FR)
(72) Inventeur: Bonfils, Xavier, 51100 Reims (FR); Brillon, Eric, 51390 Rosnay (FR)
(74) Mandataire: Sayettat, Julien Christian

(56) Documents cités:
- WO-A1-2012/128157
- US-A1- 2012 091 745
- US-B1- 6 457 688

## Description

L'invention concerne un système de recouvrement d'un compartiment à bagages de véhicule automobile et un cache bagages d'un tel système.

Il est connu, notamment du document EP-1 655 175, de réaliser un système de recouvrement d'un compartiment à bagages de véhicule automobile, ledit système comprenant deux ébénisteries latérales de garnissage dudit compartiment et un cache bagages, ledit cache bagages comprenant :
- un rideau souple de recouvrement des bagages actionnable entre une configuration déployée de recouvrement et une configuration rétractée de rangement,
- une structure de réception dudit rideau en configuration de rangement,
- deux embouts montés en extrémités de ladite structure de manière à être solidaires en rotation entre eux lorsque ledit rideau est en configuration de rangement,
lesdits embouts étant pourvus de moyens d'association réversible destinés à coopérer avec des moyens réciproques respectifs prévus en partie avant desdites ébénisteries, lesdits moyens présentant des géométries telles qu'ils puissent être mis en coopération entre eux par montage du cache bagages avec lesdits embouts mis en position angulaire décalée, selon un axe transversal, par rapport à la position angulaire nominale qu'ils occupent lorsque ledit cache bagages est monté sur lesdites ébénisteries, la mise desdits embouts dans ladite position nominale entraînant un verrouillage dudit cache bagages sur lesdits ébénisteries par coopération de formes entre les géométries respectives des moyens d'association et moyens réciproques.

Ainsi, le montage du cache bagages se fait par inclinaison du cache bagages par rapport à l'axe transversal, qui permet de mettre en coopération les moyens d'association entre eux, et par rotation dudit cache bagages pour réaliser son verrouillage.

A l'inverse, son démontage se fait par rotation en sens inverse du sens de montage, ce qui permet de réaliser le déverrouillage permettant de séparer les moyens d'association les uns des autres.

Avec un tel dispositif, se présente en cas d'accident du véhicule, un risque de rotation non voulue du cache bagages, qui peut entrainer son déverrouillage, ledit cache bagages constituant alors un projectile potentiel risquant d'occasionner des lésions aux passagers du véhicule.

L'invention a pour but de pallier cet inconvénient.

A cet effet, et selon un premier aspect, l'invention propose un système de recouvrement d'un compartiment à bagages de véhicule automobile, ledit système comprenant deux ébénisteries latérales de garnissage dudit compartiment et un cache bagages, lesdites ébénisteries étant chacune pourvue en partie avant d'un doigt saillant transversalement vers l'intérieur dudit compartiment, ledit cache bagages comprenant :
- un rideau souple de recouvrement des bagages actionnable entre une configuration déployée de recouvrement et une configuration rétractée de rangement,
- une structure de réception dudit rideau en configuration de rangement,
- deux embouts montés en extrémités de ladite structure de manière à être solidaires en rotation entre eux lorsque ledit rideau est en configuration de rangement,
ledit système présentant en outre les caractéristiques suivantes :
- chaque embout est pourvu d'un élément externe qui est pourvu d'un logement externe et d'un élément interne qui est pourvu d'un logement interne, lesdits logements débouchant vers l'extérieur dudit compartiment et étant pourvus d'une ouverture radiale externe et interne respective,
- ledit élément interne est logé dans ledit logement externe, ledit logement interne étant dimensionné de manière à pouvoir y loger un doigt respectif,
- l'un desdits éléments est fixe par rapport audit embout et l'autre desdits éléments est monté mobile en rotation sur ledit embout selon un axe transversal de manière à pouvoir passer réversiblement d'une configuration angulaire de déverrouillage, où lesdites ouvertures sont dans le prolongement l'une de l'autre, pour permettre une introduction dudit doigt dans ledit logement interne, à une configuration angulaire de verrouillage, où lesdites ouvertures sont décalées l'une par rapport à l'autre, de manière à refermer ladite ouverture interne et à bloquer ledit doigt dans ledit logement interne.

Dans cette description, les termes de positionnement dans l'espace (haut, transversal, latéral, avant, arrière, ...) sont pris en référence au dispositif disposé dans le véhicule.

Le terme « radial » est considéré relativement à l'axe de rotation autour duquel tourne l'élément rotatif.

Avec l'agencement proposé, on assure un verrouillage robuste du cache bagages sur les ébénisteries, ceci par emprisonnement du doigt dans le logement interne du fait de l'occultation de son ouverture.

Selon un deuxième aspect, l'invention propose un cache bagages d'un tel dispositif.

D'autres particularités et avantages de l'invention apparaîtront dans la description qui suit, faite en référence aux figures jointes dans lesquelles :
- la figure 1 est une vue schématique en perspective d'un système en place dans un véhicule, le rideau étant en cours de déploiement,
- la figure 2 est une vue en perspective d'une partie avant d'ébénisterie avec un doigt selon un mode de réalisation,
- les figures 3 sont des vues en perspective partielle d'un cache bagages selon une première réalisation, l'embout rotatif étant en configuration de déverrouillage (3a) et de verrouillage (3b),
- la figure 4 est une vue en perspective partielle éclatée de la réalisation des figures 3,
- la figure 5 est une vue schématique en perspective partielle éclatée d'un système avec un cache bagages selon une deuxième réalisation.

En référence aux figures, on décrit un système 1 de recouvrement d'un compartiment à bagages de véhicule automobile, ledit système comprenant deux ébénisteries 2 latérales de garnissage dudit compartiment et un cache bagages 3, lesdites ébénisteries étant chacune pourvue en partie avant d'un doigt 4 saillant transversalement vers l'intérieur dudit compartiment, ledit cache bagages comprenant :
- un rideau 5 souple de recouvrement des bagages actionnable entre une configuration déployée, notamment déroulée, de recouvrement et une configuration rétractée, notamment enroulée, de rangement, l'actionnement en enroulement étant notamment réalisée par un moyen ressort non représenté,
- une structure 6, notamment sous forme de carter, de réception dudit rideau en configuration de rangement,
- deux embouts 7 montés en extrémités de ladite structure de manière à être solidaires en rotation entre eux lorsque ledit rideau est en configuration de rangement,
ledit système présentant en outre les caractéristiques suivantes :
- chaque embout 7 est pourvu d'un élément externe 8 qui est pourvu d'un logement externe 9 et d'un élément interne 10 qui est pourvu d'un logement interne 11, lesdits logements débouchant vers l'extérieur dudit compartiment et étant pourvus d'une ouverture radiale externe 12 et interne 13 respective,
- ledit élément interne est logé dans ledit logement externe, ledit logement interne étant dimensionné de manière à pouvoir y loger un doigt 4 respectif,
- l'un desdits éléments est fixe par rapport audit embout et l'autre desdits éléments est monté mobile en rotation sur ledit embout selon un axe 14 transversal de manière à pouvoir passer réversiblement d'une configuration angulaire de déverrouillage, où lesdites ouvertures sont dans le prolongement l'une de l'autre, pour permettre une introduction dudit doigt dans ledit logement interne, à une configuration angulaire de verrouillage, où lesdites ouvertures sont décalées l'une par rapport à l'autre, de manière à refermer ladite ouverture interne et à bloquer ledit doigt dans ledit logement interne.

La course en rotation est notamment limitée de part et d'autre par des butées de fin de course, non visibles sur les figures, correspondant aux configurations angulaires de verrouillage et de déverrouillage.

Pour monter le cache bagages 3 sur les ébénisteries 2, on introduit les doigts 4 dans les logements internes 11 correspondants, au travers des ouvertures 12,13 disposées dans le prolongement l'une de l'autre, puis on réalise une rotation de la structure 6, de manière à induire une rotation relative entre les éléments 8,10 et à fermer l'ouverture interne 13.

Le démontage du cache bagages 3 se fait de façon similaire, en réalisant une rotation en sens inverse de la structure 6 de manière à ouvrir l'ouverture interne 13 et à pouvoir retirer les doigts des logements internes 11.

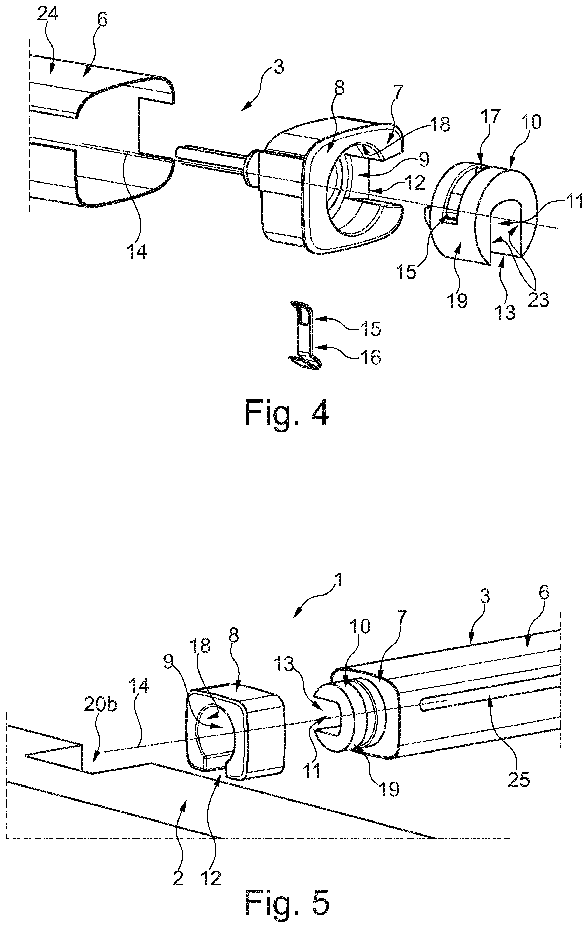

Selon la réalisation représentée en figure 4, le système 1 comprend en outre un dispositif de blocage 15 respectif d'un élément 8,10 mobile dans chacune de ses configurations angulaires de déverrouillage et de verrouillage, ledit dispositif étant désactivé par application d'un couple de rotation seuil appliqué audit élément.

En particulier, le dispositif de blocage 15 comprend une lame ressort 16 coopérant avec des bossages 17 ou, en variante non représentée, des évidements radiaux prévus sur un des éléments 8,10.

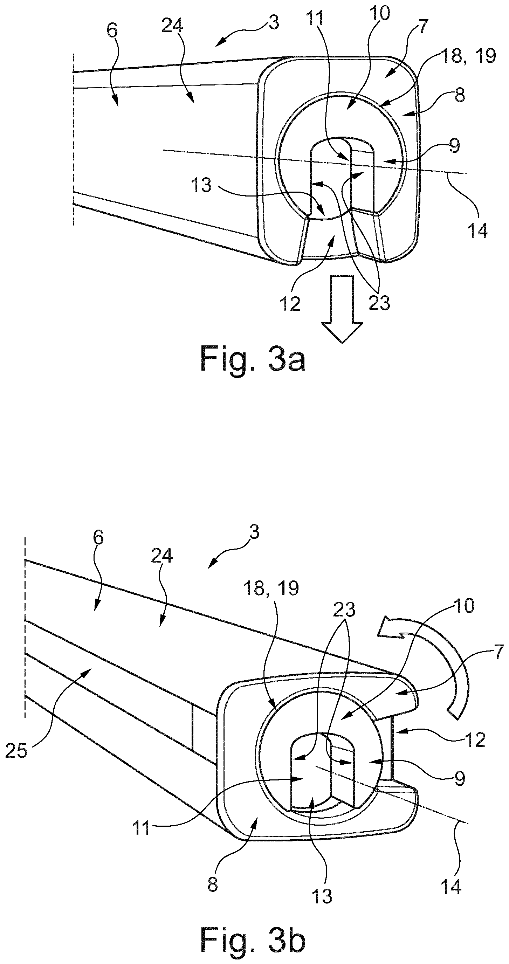

Selon les réalisations représentées en figures 3 à 5, le logement externe 9 présente une paroi interne 18 s'inscrivant dans une enveloppe cylindrique, l'ouverture externe 12 étant ici délimitée par deux génératrices de ladite enveloppe, l'élément interne 10 présentant une paroi externe 19 s'inscrivant dans ladite enveloppe de sorte que les éléments 8,10 coulissent en rotation l'un contre l'autre.

Selon les réalisations représentées en figures 3 à 5, l'écart entre les configurations angulaires de déverrouillage et de verrouillage est compris entre 30° et 90°, étant notamment de l'ordre de 90°.

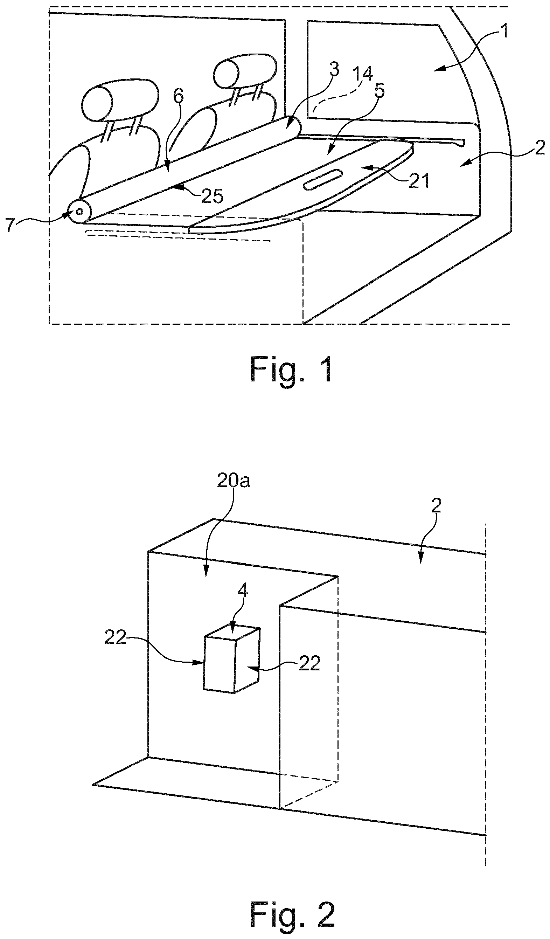

Selon la réalisation représentée en figure 2, les doigts 4 sont disposés dans des renfoncements 20a prévus dans les ébénisteries 2, lesdits renfoncements étant ouverts vers l'avant.

Avec un tel agencement, on assure une couverture optimale du compartiment à bagages par le cache bagages 3, l'espace entre ledit cache bagages et les dossiers de sièges arrière du véhicule étant minimisé.

Selon une réalisation, le système 1 comprend en outre une bavette 21, représentée en figure 1, de rigidification d'un bord arrière du rideau 5, la structure 6 étant sous forme d'un carter de réception du rideau 5 en configuration de rangement, ladite bavette étant agencée, de façon non représentée, pour se solidariser en rotation avec ledit carter, notamment par emboitement partiel dans une fente 25 de passage dudit rideau à travers le carter, lorsque ledit rideau est en configuration de rangement, de sorte que le passage de la configuration angulaire de verrouillage à la configuration angulaire de déverrouillage puisse se faire par soulèvement de ladite bavette vers le haut, ce qui évite à l'opérateur d'avoir à saisir le carter à pleines mains pour réaliser la rotation des éléments 8,10 l'un par rapport à l'autre, et améliore ainsi l'ergonomie de démontage du cache bagages 3.

Selon la réalisation représentée en figures 3 et 4, l'élément externe 8 est fixe et l'élément interne 10 est mobile en rotation, ledit élément interne et le doigt 4 correspondant étant agencés de sorte que ledit doigt soit solidaire en rotation dudit élément interne quand il est logé dans le logement interne 11.

Les éléments externes 8 sont notamment issus de moulage des embouts 7.

Selon la réalisation représentée en figure 2, un doigt 4 présente en section deux parois planes 22 parallèles, présentant en particulier une section rectangulaire ou carrée, s'ajustant à deux parois complémentaires 23, représentées en figures 3, prévues dans le logement interne 11, de manière à assurer la solidarisation en rotation dudit doigt et dudit élément interne.

De la sorte, l'élément externe 8 est mis en rotation par rapport à l'élément interne 10 par mise en rotation du carter selon l'axe 14 transversal, l'élément interne 10 restant immobile car solidarisé en rotation au doigt 4 correspondant.

La mise en rotation du carter est réalisée notamment par saisie dudit carter à pleines mains ou par saisie de la bavette 21 lorsqu'elle est agencée pour se solidariser en rotation avec ledit carter lorsque le rideau 5 est en configuration de rangement.

Selon la réalisation représentée en figures 3 et 4, l'ouverture externe 12 est sous forme d'un canal évasé vers l'extérieur, présentant ici une forme générale en entonnoir, de façon à faciliter l'introduction d'un doigt 4 dans le logement interne 11 correspondant.

Selon la réalisation représentée en figures 3 et 4, la structure 6 est sous forme d'un carter de réception du rideau 5 en configuration de rangement, les embouts 7 étant emboités dans ledit carter en laissant visible l'intégralité des bordures latérales 24 de la face externe dudit carter.

On limite ainsi, en cas d'impact sur le cache bagages 3 lors d'un accident, le risque de projection d'éclats de matériau plastique issus de parties d'embouts 7 qui recouvriraient les bordures 24, avec les risques de blessures que cela comporte pour les occupants du véhicule.

Selon la réalisation représentée en figure 5, l'élément interne 10 est fixe et l'élément externe 8 est mobile en rotation, les doigts 4 étant disposés dans des renfoncements 20b prévus dans les ébénisteries, chacun desdits renfoncements étant agencé de manière à recevoir en emboitement un élément externe 8 correspondant afin de le bloquer en rotation.

Avec un tel agencement, l'élément interne 10 est mis en rotation par rapport à l'élément externe 8 par mise en rotation du carter selon l'axe 14, ledit élément externe restant immobile car solidarisé en rotation avec le renfoncement 20b.

De façon non représentée, il peut être prévu pour tous les modes de réalisation des moyens de centrage du cache bagages 3 entre les ébénisteries 2, afin de permettre un positionnement correct dudit cache bagages quelles que soient les dispersions dimensionnelles observées dans l'écart transversal entre lesdites ébénisteries.

Les moyens de centrage sont par exemple des patins en matériau élastomère disposée en partie latérale des embouts 7 de manière à entrer en compression contre les ébénisteries 2 correspondantes lorsque le cache bagages 3 est monté sur lesdites ébénisteries.

On décrit à présent, en référence à tous les modes de réalisation représentés, un cache bagages 3 d'un système 1, ledit cache bagages comprenant :
- un rideau 5 souple de recouvrement des bagages actionnable entre une configuration déployée de recouvrement et une configuration rétractée de rangement,
- une structure 6 de réception dudit rideau en configuration de rangement,
- deux embouts 7 montés en extrémités de ladite structure de manière à être solidaires en rotation entre eux lorsque ledit rideau est en configuration de rangement,
ledit cache bagages présentant en outre les caractéristiques suivantes :
- chaque embout 7 est pourvu d'un élément externe 8 qui est pourvu d'un logement externe 9 et d'un élément interne 10 qui est pourvu d'un logement interne 11, lesdits logements débouchant vers l'extérieur dudit compartiment et étant pourvus d'une ouverture radiale externe 12 et interne 13 respective,
- ledit élément interne est logé dans ledit logement externe, ledit logement interne étant dimensionné de manière à pouvoir y loger un doigt 4 respectif,
- l'un desdits éléments est fixe par rapport audit embout et l'autre desdits éléments est monté mobile en rotation sur ledit embout selon un axe 14 transversal de manière à pouvoir passer réversiblement d'une configuration angulaire de déverrouillage, où lesdites ouvertures sont dans le prolongement l'une de l'autre, à une configuration angulaire de verrouillage, où lesdites ouvertures sont décalées l'une par rapport à l'autre, de manière à refermer ladite ouverture interne et à bloquer un doigt 4 issu d'une ébénisterie 2 dans ledit logement interne.

## Revendications

1. Système (1) de recouvrement d'un compartiment à bagages de véhicule automobile, ledit système comprenant deux ébénisteries (2) latérales de garnissage dudit compartiment et un cache bagages (3), lesdites ébénisteries étant chacune pourvue en partie avant d'un doigt (4) saillant transversalement vers l'intérieur dudit compartiment, ledit cache bagages comprenant :
• un rideau (5) souple de recouvrement des bagages actionnable entre une configuration déployée de recouvrement et une configuration rétractée de rangement,
• une structure (6) de réception dudit rideau en configuration de rangement,
• deux embouts (7) montés en extrémités de ladite structure de manière à être solidaires en rotation entre eux lorsque ledit rideau est en configuration de rangement, **caractérisé en ce que**:
• chaque embout (7) est pourvu d'un élément externe (8) qui est pourvu d'un logement externe (9) et d'un élément interne (10) qui est pourvu d'un logement interne (11), lesdits logements débouchant vers l'extérieur dudit compartiment et étant pourvus d'une ouverture radiale externe (12) et interne (13) respective,
• ledit élément interne est logé dans ledit logement externe, ledit logement interne étant dimensionné de manière à pouvoir y loger un doigt (4) respectif,
• l'un desdits éléments est fixe par rapport audit embout et l'autre desdits éléments est monté mobile en rotation sur ledit embout selon un axe (14) transversal de manière à pouvoir passer réversiblement d'une configuration angulaire de déverrouillage, où lesdites ouvertures sont dans le prolongement l'une de l'autre, pour permettre une introduction dudit doigt dans ledit logement interne, à une configuration angulaire de verrouillage, où lesdites ouvertures sont décalées l'une par rapport à l'autre, de manière à refermer ladite ouverture interne et à bloquer ledit doigt dans ledit logement interne.

2. Système selon la revendication 1, **caractérisé en ce qu'**il comprend en outre un dispositif de blocage (15) respectif d'un élément (8,10) mobile dans chacune de ses configurations angulaires de déverrouillage et de verrouillage, ledit dispositif étant désactivé par application d'un couple de rotation seuil appliqué audit élément.

3. Système selon la revendication 2, **caractérisé en ce qu'**un dispositif de blocage (15) comprend une lame ressort (16) coopérant avec des bossages (17) ou des évidements radiaux prévus sur un des éléments (8,10).

4. Système selon l'une quelconque des revendications 1 à 3, **caractérisé en ce que** l'écart entre les configurations angulaires de déverrouillage et de verrouillage est compris entre 30° et 90°.

5. Système selon l'une quelconque des revendications 1 à 4, **caractérisé en ce que** les doigts (4) sont disposés dans des renfoncements (20a) prévus dans les ébénisteries (2), lesdits renfoncements étant ouverts vers l'avant.

6. Système selon l'une quelconque des revendications 1 à 5, **caractérisé en ce qu'**il comprend en outre une bavette (21) de rigidification d'un bord arrière du rideau (5), la structure (6) étant sous forme d'un carter de réception dudit rideau en configuration de rangement, ladite bavette étant agencée pour se solidariser en rotation avec ledit carter lorsque ledit rideau est en configuration de rangement, de sorte que le passage de la configuration angulaire de verrouillage à la configuration angulaire de déverrouillage puisse se faire par soulèvement de ladite bavette vers le haut.

7. Système selon l'une quelconque des revendications 1 à 6, caractérisé en ce l'élément externe (8) est fixe et l'élément interne (10) est mobile en rotation, ledit élément interne et le doigt (4) correspondant étant agencés de sorte que ledit doigt soit solidaire en rotation dudit élément interne quand il est logé dans le logement interne (11).

8. Système selon la revendication 7, **caractérisé en ce que** la structure (6) est sous forme d'un carter de réception du rideau (5) en configuration de rangement, les embouts (7) étant emboités dans ledit carter en laissant visible l'intégralité des bordures latérales (24) de la face externe dudit carter.

9. Système selon l'une quelconque des revendications 1 à 6, caractérisé en ce l'élément interne (10) est fixe et l'élément externe (8) est mobile en rotation, les doigts (4) étant disposés dans des renfoncements (20b) prévus dans les ébénisteries (2), chacun desdits renfoncements étant agencé de manière à recevoir en emboitement un élément externe (12) correspondant afin de le bloquer en rotation.

10. Cache bagages (3) d'un système selon l'une quelconque des revendications 1 à 9, ledit cache bagages comprenant :
• un rideau (5) souple de recouvrement des bagages actionnable entre une configuration déployée de recouvrement et une configuration rétractée de rangement,
• une structure (6) de réception dudit rideau en configuration de rangement,
• deux embouts (7) montés en extrémités de ladite structure de manière à être solidaires en rotation entre eux lorsque ledit rideau est en configuration de rangement,
ledit cache bagages présentant en outre les caractéristiques suivantes :
• chaque embout (7) est pourvu d'un élément externe (8) qui est pourvu d'un logement externe (9) et d'un élément interne(10) qui est pourvu d'un logement interne (11), lesdits logements débouchant vers l'extérieur dudit compartiment et étant pourvus d'une ouverture radiale externe (12) et interne (13) respective,
• ledit élément interne est logé dans ledit logement externe, ledit logement interne étant dimensionné de manière à pouvoir y loger un doigt (4) respectif,
• l'un desdits éléments est fixe par rapport audit embout et l'autre desdits éléments est monté mobile en rotation sur ledit embout selon un axe (14) transversal de manière à pouvoir passer réversiblement d'une configuration angulaire de déverrouillage, où lesdites ouvertures sont dans le prolongement l'une de l'autre, à une configuration angulaire de verrouillage, où lesdites ouvertures sont décalées l'une par rapport à l'autre, de manière à refermer ladite ouverture interne et à bloquer un doigt (4) issu d'une ébénisterie (2) dans ledit logement interne.

## Patentansprüche

1. Abdecksystem (1) eines Kofferraumfachs eines Kraftfahrzeugs, wobei das System zwei seitliche Verkleidungsblenden (2) des Fachs und eine Gepäckabdeckung (3) umfasst, wobei die Blenden jeweils im vorderen Teil mit einem transversal in das Innere des Fachs hervorstehenden Finger (4) ausgestattet sind, wobei die Gepäckabdeckung umfasst:
- einen elastischen Vorhang (5) zum Abdecken des Gepäcks, der zwischen einer entfalteten Abdeckungskonfiguration und einer zurückgezogenen Verstaukonfiguration betätigbar ist,
- eine Empfangsstruktur (6) des Vorhangs in Verstaukonfiguration,
- zwei Ansätze (7), die an den Enden der Struktur derart angebracht sind, dass sie in Rotation miteinander fest verbunden sind, wenn der Vorhang in Verstaukonfiguration ist,
**dadurch gekennzeichnet, dass**:
- jeder Ansatz (7) mit einem äußeren Element (8) ausgestattet ist, das mit einer äußeren Aufnahme (9) ausgestattet ist, und mit einem inneren Element (10), das mit einer inneren Aufnahme (11) ausgestattet ist, wobei die Aufnahmen aus dem Fach ausmünden und mit einer jeweiligen äußeren (12) und inneren (13) radialen Öffnung ausgestattet sind,
- das innere Element in der äußeren Aufnahme aufgenommen ist, wobei die innere Aufnahme derart bemessen ist, dass dort ein jeweiliger Finger (4) aufnehmbar ist,
- eines der Elemente in Bezug zu dem Ansatz fest ist und das andere der Elemente gemäß einer transversalen Achse (14) in Rotation bewegbar auf dem Ansatz derart angebracht ist, dass es aus einer entriegelnden Winkelkonfiguration, in der die Öffnungen in der Verlängerung zueinander sind, um ein Einführen des Fingers in die innere Aufnahme zu erlauben, in eine verriegelnde Winkelkonfiguration, in der die Öffnungen in Bezug zueinander derart versetzt sind, dass die innere Öffnung verschlossen und der Finger in der inneren Aufnahme blockiert ist, reversibel wechseln kann.

2. System nach Anspruch 1, **dadurch gekennzeichnet, dass** es ferner eine jeweilige Blockiervorrichtung (15) eines in jeder seiner entriegelnden und verriegelnden Winkelkonfiguration beweglichen Elements (8, 10) umfasst, wobei die Vorrichtung durch Anwendung eines auf das Element angewendeten Grenzwertdrehmoments deaktiviert wird.

3. System nach Anspruch 2, **dadurch gekennzeichnet, dass** eine Blockiervorrichtung (15) eine Blattfeder (16) umfasst, die mit Vorsprüngen (17) oder radialen Aussparungen, die auf einem der Elemente (8,10) vorgesehen sind, zusammenwirkt.

4. System nach einem der Ansprüche 1 bis 3, **dadurch gekennzeichnet, dass** der Abstand zwischen der entriegelnden und verriegelnden Winkelkonfiguration zwischen 30° und 90° beträgt.

5. System nach einem der Ansprüche 1 bis 4, **dadurch gekennzeichnet, dass** die Finger (4) in in den Blenden (2) vorgesehenen Ausnehmungen (20a) angeordnet sind, wobei die Ausnehmungen nach vorn offen sind.

6. System nach einem der Ansprüche 1 bis 5, **dadurch gekennzeichnet, dass** es ferner eine Versteifungsschürze (21) eines hinteren Randes des Vorhangs (5) umfasst, wobei die Struktur (6) in Form eines Empfangsgehäuses des Vorhangs in Verstaukonfiguration ist, wobei die Schürze ausgebildet ist, um sich mit dem Gehäuse in Rotation fest zu verbinden, wenn der Vorhang in Verstaukonfiguration ist, so dass der Wechsel aus der verriegelnden Winkelkonfiguration in die entriegelnde Winkelkonfiguration durch Anheben der Schürze nach oben erfolgen kann.

7. System nach einem der Ansprüche 1 bis 6, **dadurch gekennzeichnet, dass** das äußere Element (8) fest ist und das innere Element (10) in Rotation beweglich ist, wobei das innere Element und der entsprechende Finger (4) derart ausgebildet sind, dass der Finger mit dem inneren Element in Rotation fest verbunden ist, wenn er in der inneren Aufnahme (11) aufgenommen ist.

8. System nach Anspruch 7, **dadurch gekennzeichnet, dass** die Struktur (6) in Form eines Empfangsgehäuses des Vorhangs (5) in Verstaukonfiguration vorliegt, wobei die Ansätze (7) in dem Gehäuse rasten und dabei die seitlichen Ränder (24) der äußeren Fläche des Gehäuses vollständig sichtbar bleiben.

9. System nach einem der Ansprüche 1 bis 6, **dadurch gekennzeichnet, dass** das innere Element (10) fest ist und das äußere Element (8) in Rotation beweglich ist, wobei die Finger (4) in in den Blenden (2) vorgesehenen Ausnehmungen (20b) angeordnet sind, wobei jede der Ausnehmungen derart ausgebildet ist, um ein entsprechendes äußeres Element (12) rastend aufzunehmen, um dessen Rotation zu blockieren.

10. Gepäckabdeckung (3) eines Systems nach einem der Ansprüche 1 bis 9, wobei die Gepäckabdeckung umfasst:
- einen elastischen Vorhang (5) zum Abdecken des Gepäcks, der zwischen einer entfalteten Abdeckungskonfiguration und einer zurückgezogenen Verstaukonfiguration betätigbar ist,
- eine Empfangsstruktur (6) des Vorhangs in Verstaukonfiguration,
- zwei Ansätze (7), die an den Enden der Struktur derart angebracht sind, dass sie in Rotation fest miteinander verbunden sind, wenn der Vorhang in Verstaukonfiguration ist,
wobei die Gepäckabdeckung ferner die folgenden Merkmale aufweist:
- jeder Ansatz (7) ist mit einem äußeren Element (8) ausgestattet, das mit einer äußeren Aufnahme (9) ausgestattet ist, und mit einem inneren Element (10), das mit einer inneren Aufnahme (11) ausgestattet ist, wobei die Aufnahmen aus dem Fach ausmünden und mit einer jeweiligen äußeren (12) und inneren (13) radialen Öffnung ausgestattet sind,
- das innere Element ist in der äußeren Aufnahme aufgenommen, wobei die innere Aufnahme derart bemessen ist, dass dort ein jeweiliger Finger (4) aufnehmbar ist,
- eines der Elemente ist in Bezug zu dem Ansatz fest und das andere der Elemente ist gemäß einer transversalen Achse (14) in Rotation bewegbar auf dem Ansatz derart angebracht, dass es aus einer entriegelnden Winkelkonfiguration, in der die Öffnungen in der Verlängerung zueinander sind, in eine verriegelnde Winkelkonfiguration, in der die Öffnungen in Bezug zueinander derart versetzt sind, dass die innere Öffnung verschlossen und ein Finger (4) aus einer Blende (2) in der inneren Aufnahme blockiert ist, reversibel wechseln kann.

## Claims

1. System (1) for covering a motor vehicle luggage compartment, said system comprising two lateral panels (2) lining said compartment and a luggage cover (3), said panels each being provided at the front part with a finger (4) projecting transversely towards the inside of said compartment, said luggage cover comprising:
- a flexible curtain (5) for covering the luggage, able to be actuated between a deployed covering configuration and a retracted storage configuration,
- a structure (6) for receiving said curtain in the storage configuration,
- two end pieces (7) mounted at the ends of said structure so as to be constrained to rotate with each other when said curtain is in the storage configuration,
**characterised in that**:
- each end piece (7) is provided with an external element (8) that is provided with an external housing (9) and an internal element (10) that is provided with an internal housing (11), said housings emerging towards the outside of said compartment and being provided with a respective external (12) and internal (13) radial opening,
- said internal element is housed in said external housing, said internal housing being sized so as to be able to house therein a respective finger (4),
- one of said elements is fixed with respect to said end piece and the other one of said elements is mounted so as to be able to rotate on said end piece on a transverse axis (14) so as to be able to pass reversibly from an angular released configuration in which said openings are in line with each other, to allow introduction of said finger into said internal housing, to an angular locked configuration, in which said openings are offset with respect to each other, so as to close said internal opening and to lock said finger in said internal housing.

2. System according to claim 1, **characterised in that** it further comprises a respective device (15) for locking a movable element (8, 10) in each of its angular released and locked configurations, said device being deactivated by applying a threshold rotation torque applied to said element.

3. System according to claim 2, **characterised in that** a locking device (15) comprises a spring blade (16) cooperating with radial protrusions (17) or recesses provided on one of said elements (8, 10).

4. System according to any of claims 1 to 3, **characterised in that** the difference between the angular released and locked configurations is between 30° and 90°.

5. System according to any of claims 1 to 4, **characterised in that** the fingers (4) are disposed in hollows (20a) provided in the panels (2), said hollows being open towards the front.

6. System according to any of claims 1 to 5, **characterised in that** it further comprises a flap (21) for stiffening a rear edge of the curtain (5), the structure (6) being in the form of a casing receiving said curtain in the storage configuration, said flap being arranged so as to be constrained to rotate with said casing when said curtain is in the storage configuration, so that passage from the angular locked configuration to the angular released configuration can take place by raising said flap upwards.

7. System according any of claims 1 to 6, **characterised in that** the external element (8) is fixed and the internal element (10) is able to rotate, said internal element and the corresponding finger (4) being arranged so that said finger is constrained to rotate with said internal element when it is housed in the internal housing (11).

8. System according to claim 7, **characterised in that** the structure (6) is in the form of a casing receiving the curtain (5) in the storage configuration, the end pieces (7) being fitted in said casing, leaving the whole of the lateral rims (24) of the external face of said casing visible.

9. System according to any of claims 1 to 6, **characterised in that** the internal element (10) is fixed and the external element (8) is able to rotate, the fingers (4) being disposed in hollows (20b) provided in the panels (2), each of said hollows being arranged so as to receive a corresponding external element (12) fitted so as to lock it in rotation.

10. Luggage cover (3) of a system according to any of claims 1 to 9, said luggage cover comprising:
- a flexible curtain (5) for covering the luggage, able to be actuated between a deployed covering configuration and a retracted storage configuration,
- a structure (6) for receiving said curtain in the storage configuration,
- two end pieces (7) mounted at the ends of said structure so as to be constrained to rotate with each other when said curtain is in the storage configuration, said luggage cover further having the following features:
- each end piece (7) is provided with an external element (8) that is provided with an external housing (9) and an internal element (10) that is provided with an internal housing (11), said housings emerging towards the outside of said compartment and being provided with a respective external (12) and internal (13) opening,
- said internal element is housed in said external housing, said internal housing being sized so as to be able to house therein a respective finger (4),
- one of said elements is fixed with respect to said end piece and the other one of said elements is mounted so as to be able to rotate on said end piece on a transverse axis (14) so as to be able to pass reversibly from an angular released configuration in which said openings are in line with each other, to an angular locked configuration, in which said openings are offset with respect to each other, so as to close said internal opening and to lock said finger in said internal housing.
